# EUROPEAN PATENT APPLICATION

(11) **EP 3 076 531 A1**
(43) Date of publication of application: **05.10.2016**
(21) Application number: 14865143.3
(22) Date of filing: 07.11.2014
(51) Int. Cl.: H02K 33/18, H02N 15/00

(54) **FLAT VOICE COIL MOTOR**

(30) Priority: 26.11.2013 CN 201310612815
(71) Applicant: Shanghai Micro Electronics Equipment Co., Ltd., Shanghai 201203 (CN)
(72) Inventor: DUAN, Subing, Shanghai 201203 (CN); ZHANG, Zhigang, Shanghai 201203 (CN); CHEN, Qingsheng, Shanghai 201203 (CN); LIU, Xiaohu, Shanghai 201203 (CN)
(74) Representative: Lavoix
(86) International application number: PCT/CN2014/090589
(87) International publication number: WO 2015/078287

(57) **Abstract**

A flat voice coil motor, including a coil unit and two primary magnetic pole units exerting an Ampere force on the coil unit. The coil unit includes a small, weak magnet (107), and the force exerted by the two primary magnetic pole units on the small, weak magnet (107) is a vertically upward resultant force. By arranging the small, weak magnet (107) in the coil unit, magnetic repulsion or attraction forces between the small, weak magnet and the primary magnetic pole units always ensure a vertically upward force on the coil unit, thereby achieving gravity compensation. In addition, this arrangement is achieved simply by replacing an internal portion of the coil unit with the small, weak magnet (107), which neither has influence on the Ampere force acting on a coil in the coil unit nor adversely leads to motor overheating caused by a structural addition.

## Description

### TECHNICAL FIELD

The present invention relates to semiconductor processing equipment and, more particularly, to a flat voice coil motor.

### BACKGROUND

Flat voice coil motors made in accordance with the Ampere force law are suited to use in servo control applications requiring high speeds, high accelerations, linear force or torque response, because of their structural simplicity, convenient maintenance, high reliability, high energy conversion efficiency, fixed strokes, direct drivability, smooth force-stroke outputs, linear controllability, low electrical and mechanical time constants, high thrust/mass ratios, absence of slot effects, no need for direction adjustments, theoretically unlimited degrees of position sensitivity, and absence of cogging and delayed response. These features also make the flat voice coil motors suitable for use in precision positioning components for photolithography tools which require high speed, high-precision positioning.

In recent years, with the increasing integration degree of semiconductor devices, wafer positioning stages with multiple degrees of freedom used in photolithography tools for semiconductor processing are required to achieve a positioning precision on the order of sub-microns. In order to reduce vibration and increase positioning accuracy of these wafer stages, voice coil motors are generally used for their actuation. In addition, the voice coil motors may also be used as actuating mechanisms for focusing of objectives in photolithography tools in order to improve photolithography accuracy.

However, due to absence of mover gravity compensation of conventional flat voice coil motors, unnecessary gravity-caused errors may occur during operation of the motors. On the other hand, use of external means for gravity compensation may in high likelihood adversely lead to motor overheating.

### SUMMARY OF THE INVENTION

It is an objective of the present invention to provide a flat voice coil motor with mover gravity compensation.

This objective is attained by a flat voice coil motor according to the present invention, which includes a coil unit and two primary magnetic pole units exerting an Ampere force on the coil unit, wherein the coil unit includes a small, weak magnet, and the Ampere force exerted by the two primary magnetic pole units on the small, weak magnet is a vertically upward resultant force.

Each of the two primary magnetic pole units at least may include a pair of primary magnets equidistant from the coil unit, and the two primary magnetic pole units may be symmetric relative to the coil unit.

In the two primary magnetic pole units, every two primary magnets that are symmetric to each other may have the same magnetization direction, and the pair of primary magnets in each of the two primary magnetic pole units may have opposite magnetization directions.

The two primary magnetic pole units may be disposed left and right to the coil unit to create a horizontal primary magnetic field; the coil unit may include two energized conductor portions cutting the primary magnetic field; and the two energized conductor portions may be arranged vertically with respect to each other.

The two primary magnetic pole units may exert a vertically upward Ampere force on the coil unit, wherein the small, weak magnet may have a magnetization direction same as magnetization directions of two primary magnets that are disposed above the small, weak magnet in the two primary magnetic pole units.

The two primary magnets that are disposed above the small, weak magnet may exert a vertically upward resultant magnetic attraction force on the small, weak magnet, and the two primary magnets that are disposed under the small, weak magnet may exert a vertically upward resultant magnetic repulsion force on the small, weak magnet.

The two primary magnetic pole units may be disposed above and under the coil unit to create a vertical primary magnetic field; the coil unit may include two energized conductor portions cutting the vertical primary magnetic field; and the two energized conductor portions may be arranged horizontally with respect to each other.

The small, weak magnet may have a magnetization direction same as a direction of the Ampere force exerted on the coil unit.

The two primary magnets in the two primary magnetic pole units that are disposed above the small, weak magnet in the two primary magnetic pole units may exert a vertically upward resultant magnetic attraction force on the small, weak magnet, and the two primary magnets that are disposed under the small, weak magnet may exert a vertically upward resultant magnetic repulsion force on the small, weak magnet.

The flat voice coil motor may further include spacer magnets and back irons, each of the spacer magnets is disposed between two primary magnets of a corresponding pair of primary magnets, and each of the spacer magnets together with the corresponding pair of primary magnets are fixed on a corresponding one of the back irons.

The flat voice coil motor may further include spacer magnets, wherein each of the spacer magnets is disposed between the two primary magnets of a corresponding pair of primary magnets, a left one of the spacer magnets having a magnetization direction opposite to a direction of the Ampere force exerted on the coil unit and a right one of the spacer magnets having a magnetization direction same as the direction of the Ampere force exerted on the coil unit.

The flat voice coil motor may further include spacer magnets, wherein each of the spacer magnets is disposed between the two primary magnets of a corresponding pair of primary magnets, a lower one of the spacer magnets having a magnetization direction same as a direction of the Ampere force exerted on the coil unit and an upper one of the spacer magnets having a magnetization direction opposite to the direction of the Ampere force exerted on the coil unit.

The small, weak magnet may have a dimension extending along a direction in which the small, weak magnet faces the energized conductor portions cutting the primary magnetic field that is greater than a dimension of the small, weak magnet extending along a direction in which the small, weak magnet faces the primary magnets.

The coil unit may further include a bobbin and a coil wound on the bobbin; the small weak magnet is disposed in the bobbin, and the bobbin is oriented in a direction around which the coil is wound.

The coil unit may further include back irons, each pair of primary magnets is fixed on a corresponding one of the back irons; the coil is wound on the bobbin around an axis that is parallel to the primary magnetic field created by the two primary magnetic pole units and perpendicular to the back irons.

According to the present invention, the coil unit is provided with a small, weak magnet disposed therein, which creates magnetic repulsion or attraction forces with the primary magnetic pole units, thereby always ensuring a vertically upward force on the coil unit to provide gravity compensation. In addition, this arrangement is achieved simply by replacing an internal portion of the coil unit with the small, weak magnet, which neither has influence on the Ampere force acting on the coil in the coil unit nor adversely leads to motor overheating caused by a structural addition. In this way, a flat voice coil motor with mover gravity compensation is entailed.

### BRIEF DESCRIPTION OF THE DRAWINGS

FIG. 1 is a schematic illustration of a flat voice coil motor in accordance with Embodiment 1 of the present invention.
FIG. 2 schematically shows forces exerting on a weak magnet in the flat voice coil motor in accordance with Embodiment 1 of the present invention.
FIG. 3 is a perspective view of the weak magnet in the flat voice coil motor in accordance with Embodiment 1 of the present invention.
FIG. 4 shows a transverse cross section of the weak magnet in the flat voice coil motor in accordance with Embodiment 1 of the present invention.
FIG. 5 shows a longitudinal cross section of the weak magnet in the flat voice coil motor in accordance with Embodiment 1 of the present invention.
FIG 6 is a schematic illustration of a flat voice coil motor in accordance with Embodiment 2 of the present invention.
FIG. 7 schematically shows forces acting on a weak magnet in the flat voice coil motor in accordance with Embodiment 2 of the present invention.
FIG. 8 is a perspective view of the weak magnet in the flat voice coil motor in accordance with Embodiment 2 of the present invention.
FIG. 9 shows a transverse cross section of the weak magnet in the flat voice coil motor in accordance with Embodiment 2 of the present invention.
FIG. 10 shows a longitudinal cross section of the weak magnet in the flat voice coil motor in accordance with Embodiment 2 of the present invention.
FIG. 11 is a schematic illustration of a flat voice coil motor in accordance with Embodiment 3 of the present invention.
FIG. 12 is a perspective view of a weak magnet in the flat voice coil motor in accordance with Embodiment 3 of the present invention.
FIG. 13 shows a transverse cross section of the weak magnet in the flat voice coil motor in accordance with Embodiment 3 of the present invention.
FIG. 14 shows a longitudinal cross section of the weak magnet in the flat voice coil motor in accordance with Embodiment 3 of the present invention.
FIG. 15 is a schematic illustration of a flat voice coil motor in accordance with Embodiment 4 of the present invention.
FIG. 16 is a perspective view of a weak magnet in the flat voice coil motor in accordance with Embodiment 4 of the present invention.
FIG. 17 shows a transverse cross section of the weak magnet in the flat voice coil motor in accordance with Embodiment 4 of the present invention.
FIG. 18 shows a longitudinal cross section of the weak magnet in the flat voice coil motor in accordance with Embodiment 4 of the present invention.

In these figures, 101a, 101b, 102a and 102b represent primary magnets, 103a and 103b indicate spacer magnets, 104 represents coil, 105 represents bobbin, 106 represents back irons, and 107 represents weak magnet.

### DETAILED DESCRIPTION

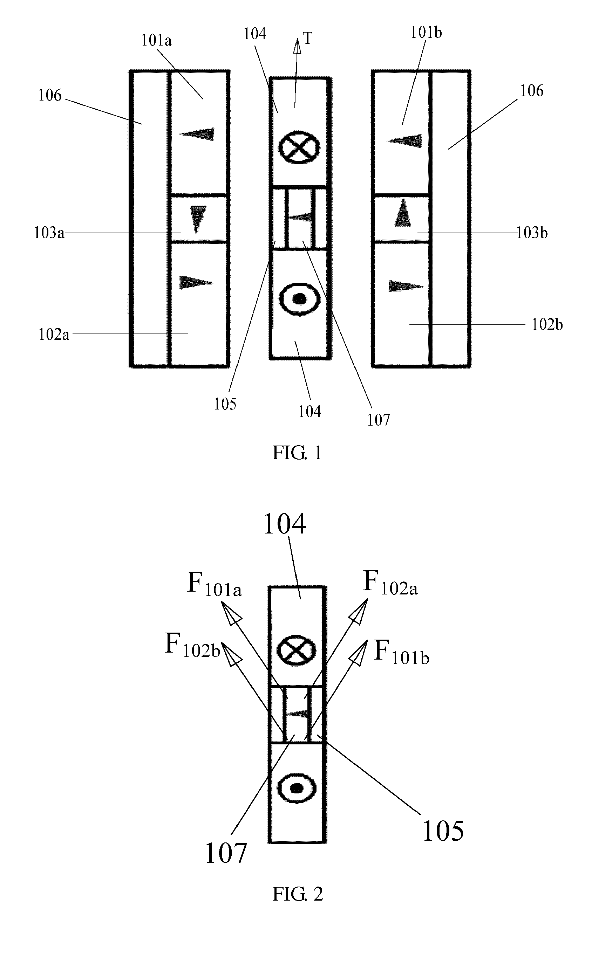

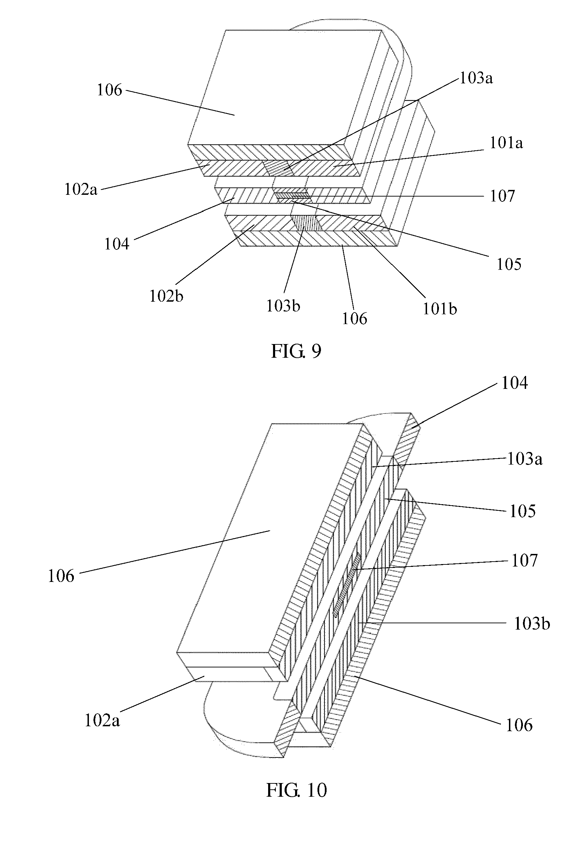

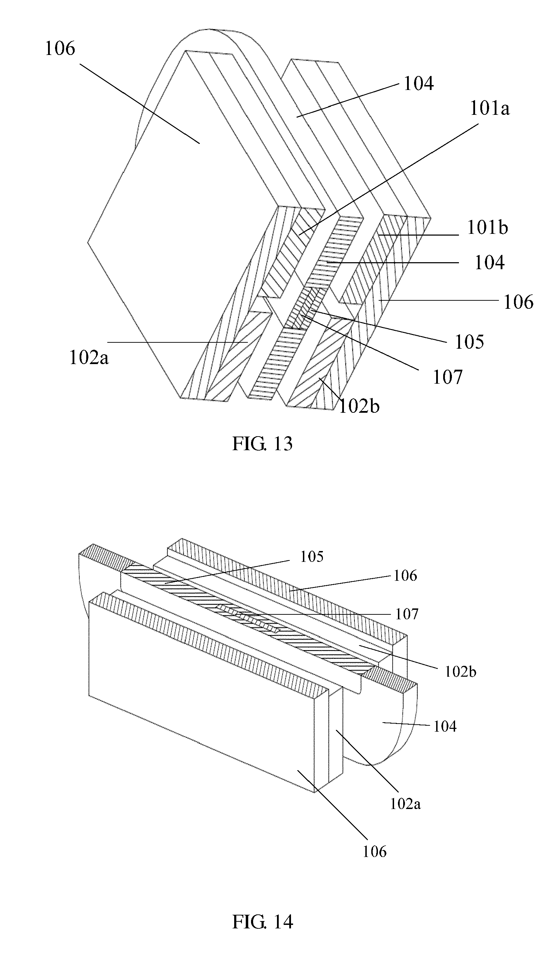

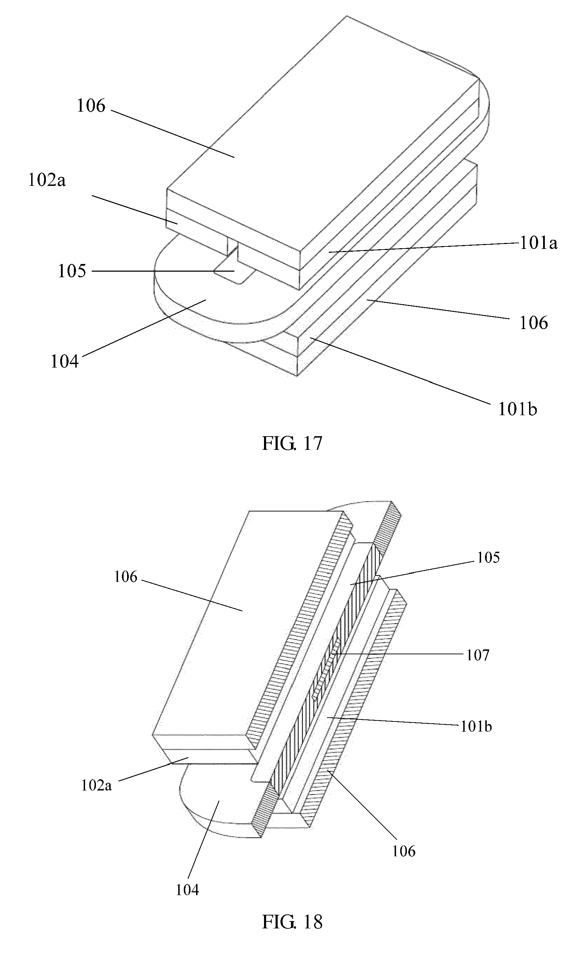

Reference is made below to four Embodiments, in conjunction with FIGs. 1 to 18, in order to describe in detail the flat voice coil motors with gravity compensation according to the present invention. These Embodiments are optional and considered to be alterable and modifiable by those skilled in the art without deviating from the spirit and scope of the invention.

### EMBODIMENT 1

Referring to FIG. 1, a flat voice coil motor with gravity compensation constructed in accordance with this Embodiment includes a coil unit and two primary magnetic pole units which exert an Ampere force T on the coil unit. The coil unit includes a small, weak magnet 107, a coil 104 and a bobbin 105. The two primary magnetic pole units exert a vertically upward resultant force on the small, weak magnet 107 to provide gravity compensation for the coil unit.

In this Embodiment, as the coil unit includes the weak magnet 107, the magnetic repulsion or attraction forces between the weak magnet 107 and the primary magnetic pole units always ensure a vertically upward force on the coil unit to provide gravity compensation. In addition, this arrangement is simply achieved by replacing an internal portion of the coil unit with the small, weak magnet 107, which neither has influence on the Ampere force acting on the coil 104 in the coil unit nor adversely leads to motor overheating caused by a structural addition. In this way, a flat voice coil motor with mover gravity compensation is entailed.

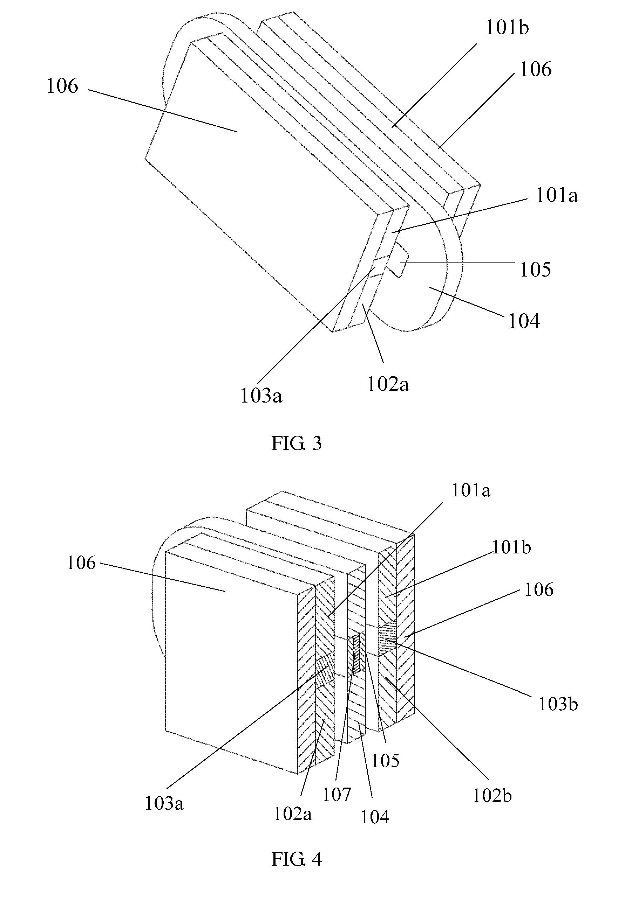

Referring to FIG. 1, in conjunction with FIGs. 3 to 5, the primary magnetic pole units each have at least a pair of primary magnets, indicated respectively at 101a and 102a and at 101b and 102b. The primary magnets 101a, 101b, 102a and 102b are equidistant with respect to the coil unit, so that the two primary magnetic pole units are symmetric relative to said coil unit.

In the two primary magnetic pole units, those two primary magnets that are symmetric to each other have the same magnetization direction, i.e., according to this Embodiment, the primary magnets 101a and 101b have the same magnetization direction and the primary magnets 102a and 102b have the same magnetization direction. On the other hand, the two primary magnets in each primary magnetic pole unit have opposite magnetization directions, i.e., according to this Embodiment, the primary magnets 101a and 102a have opposite magnetization directions and the primary magnets 101b and 102b have opposite magnetization directions.

In this Embodiment, with reference to FIGs. 1 and 2, each of the coil unit and the two primary magnetic pole units extends in a vertical direction, and the two primary magnets of each primary magnetic pole unit are arranged along the vertical direction. In other words, in FIG. 1, the primary magnet 101a is arranged vertically next to the primary magnet 102a, and the primary magnet 101b is arranged vertically next to the primary magnet 102b.

In this Embodiment, with reference to FIG. 1, in conjunction with FIG. 4, the two primary magnetic pole units create a horizontal primary magnetic field. In other words, the magnetization directions of the primary magnets in the primary magnetic pole units are horizontally configured, and two energized conductor portions of the coil unit that cut the primary magnetic field are arranged vertically with respect to each other.

In this Embodiment, referring to FIG. 2, in conjunction with FIG. 1, magnetic attraction forces F101a and F101b between the small, weak magnet 107 and the two primary magnets 101a and 101b disposed above it are combined into a single vertically upward resultant magnetic attraction force applied on the coil unit, and magnetic repulsion forces F102a and F102b between the small, weak magnet 107 and the two primary magnets 102a and 102b disposed under it are combined into a vertically upward resultant magnetic repulsion force also on the coil unit.

Therefore, in this Embodiment, the two primary magnetic pole units exert a vertically upward Ampere force on the coil unit, and the small, weak magnet 107 has the same magnetization direction as the two primary magnets disposed above it. Referring to FIGs. 1 and 2, the magnetization directions of the primary magnets 101a, 101b, 102a and 102b are all horizontal, in which, according to this Embodiment, those of the primary magnets 101a and 101b are both horizontally to the left, and those of the primary magnets 102a and 102b are both horizontally to the right. Additionally, the small, weak magnet 107 has the same magnetization direction as the two primary magnets 101a and 101b disposed above it. Specifically, as indicated by the illustrated magnetization directions in the figures, the primary magnets 101 a and 101b and the small, weak magnet 107 each have a north pole on the left side and a south pole on the right side. For this reason, upward angular magnetic attraction forces, as shown in FIG. 2, are generated between their south and north poles. Since the horizontal components of these forces cancel out each other in the horizontal direction, the two primary magnets 101a and 101b apply a vertically upward force on the small, weak magnet 107 and thus the coil unit. For the similar reason, due to their horizontal, right-bound magnetization directions, the primary magnets 102a and 102b create magnetic repulsion forces with the small, weak magnet 107 which are combined into a vertically upward force on the coil unit.

Referring to FIG. 1, the flat voice coil motor further includes spacer magnets 103 and back irons 106. The spacer magnets 103 and the pairs of primary magnets 101 and 102 are fixed on the back irons 106. Each of the spacer magnets 103 is disposed between the magnets of one of the pairs of primary magnets 101 and 102. The magnetization directions of the spacer magnets 103 are perpendicular to the magnetization directions of the primary magnets 101 and 102. The spacer magnets 103 in the two primary magnetic pole units, i.e., magnets 103a and 103b, according to this Embodiment, have opposite magnetization directions.

Referring to FIG. 1, the magnetization direction of the spacer magnet 103a left to the small, weak magnet 107 is opposite to the direction of the Ampere force exerted on the coil unit, i.e., vertically downward, while the magnetization direction of the spacer magnet 103b right to the small, weak magnet 107 is the same as the direction of the Ampere force exerted on the coil unit, i.e., vertically upward.

A dimension of the small, weak magnet 107 extending along the direction of the Ampere force exerted on the coil unit is greater than a dimension of the small, weak magnet 107 extending along a direction in which the small, weak magnet 107 faces the two spacer magnets 103. In particular, according to this Embodiment, with emphasized reference to FIG. 1, the direction of the Ampere force T is vertically upward, and the small, weak magnet 107 has a vertical dimension that is greater than its horizontal dimension.

Referring to FIG. 1, the coil unit further includes the bobbin 105 and the coil 104. The small, weak magnet 107 is disposed within the bobbin 105, and the coil 104 is wounded around the bobbin 105. The bobbin 105 extends in parallel to the primary magnetic field created by the two primary magnetic pole units and perpendicularly to the outermost back irons 106. This ensures a current flowing in the coil to follow the direction as shown in FIG. 1 so as to generate the vertically upward Ampere force.

It is to be understood by those skilled in the art that, substituting the magnetization directions of all the magnets 101, 102, 103 and 107 in FIG. 1 for respective opposite directions will still achieve the creation of a vertically upward resultant force on the small, weak magnet 107 by the two primary magnetic pole units and hence gravity compensation for the coil unit, and is therefore considered to be also within the scope of the present invention.

### EMBODIMENT 2

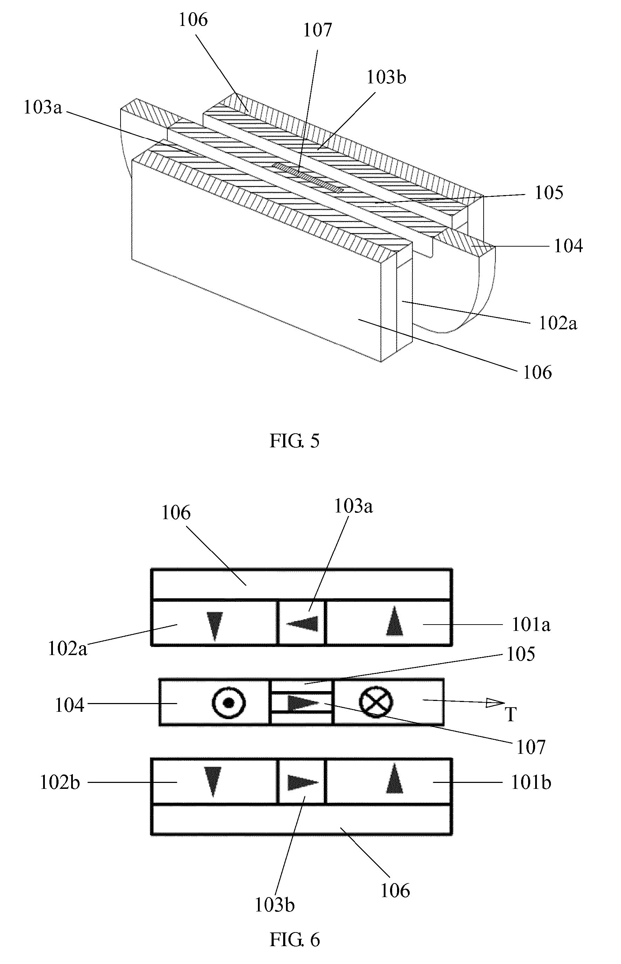

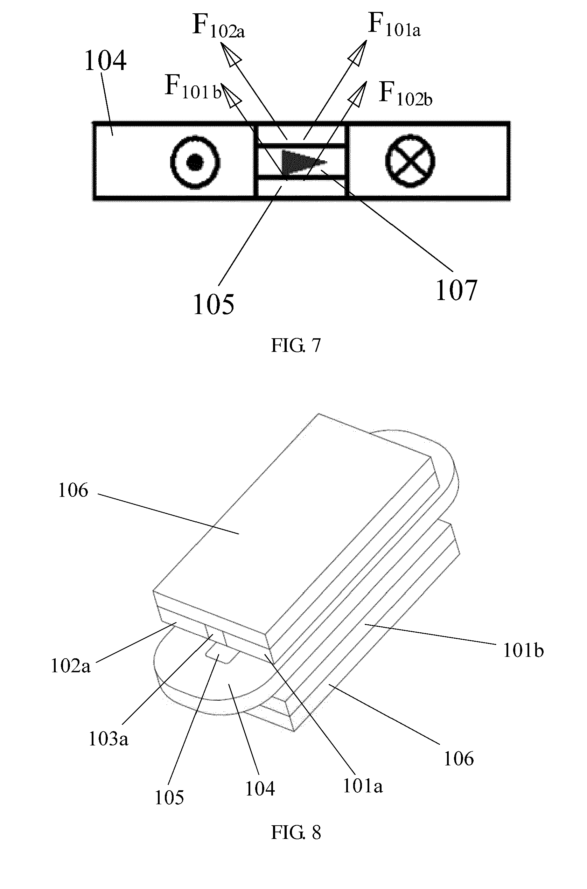

Referring to FIGs. 6 and 7, in conjunction with FIGs. 8 to 10, this Embodiment differs from Embodiment 1 essentially in the two primary magnetic pole units creating a vertical primary magnetic field and in the two energized conductor portions of the coil unit that cut this primary magnetic field being arranged horizontally with respect to each other. In this Embodiment, the magnetization direction of the small, weak magnet 107 is the same as the direction of the Ampere force acting on the coil unit. The two primary magnets 101a and 102a above the coil unit exert a vertically upward magnetic attraction force on the small, weak magnet 107, while the two primary magnets 101b and 102b under the coil unit exert a vertically upward magnetic repulsion force on the small, weak magnet 107. The upward magnetic attraction force exerted on the small, weak magnet 107 and hence the coil unit is a force resulting from the combination of upward angular forces F102a and F101a, as shown in FIG 7, by mutual cancellation of their horizontal components. The upward angular forces are generated due to attraction between opposite south and north poles. In addition, as the primary magnets 101b and 102b under the coil unit have the same magnetization direction as the primary magnets 101 a and 102a above the coil unit, north and south poles of the primary magnets 101b and 102b are situated proximate the north and south poles of the small, weak magnet 107, respectively. Repulsion between the like poles leads to F102b and F101b, as shown in FIG. 7, which are combined into an upward angular force on the small, weak magnet 107 and hence the coil unit.

In this Embodiment, the flat voice coil motor further includes spacer magnets 103 each disposed between the magnets of one of the pairs of primary magnets 101 and 102, with a lower spacer magnet 103b having the same magnetization direction as the direction of the Ampere force exerted on the coil unit and an upper spacer magnet 103a having a magnetization direction opposite to the direction of the Ampere force exerted on the coil unit.

This Embodiment is similar to Embodiment 1 in the rest part of the flat voice coil motor. Specifically, the flat voice coil motor according to this Embodiment also includes back irons 106 and magnets 103, and the coil unit according to this Embodiment is structurally identical to that of Embodiment 1, as schematically illustrated in FIGs. 8 to 10.

It is to be understood by those skilled in the art that, substituting the magnetization directions of all the magnets 101, 102, 103 and 107 in FIG. 6 for respective opposite directions will still achieve the creation of a vertically upward resultant force on the small, weak magnet 107 by the two primary magnetic pole units and hence gravity compensation for the coil unit, and is therefore considered to be also within the scope of the present invention.

### EMBODIMENT 3

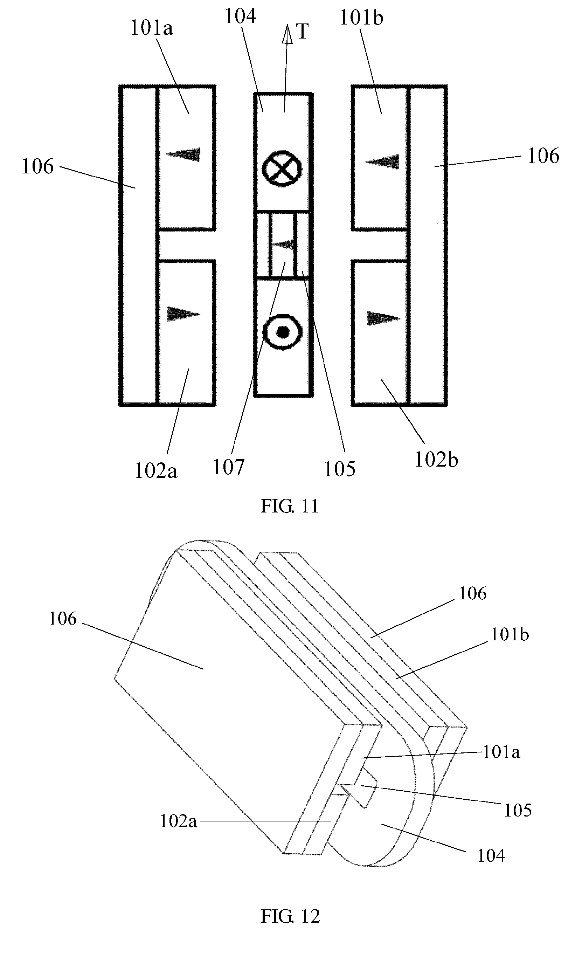

Referring to FIGs. 11 to 14, this Embodiment differs from Embodiment 1 only in not including magnets 103 but works in the same way as Embodiment 1. In this Embodiment, each primary magnetic pole unit includes two primary magnets and a back iron on which the primary magnets are fixed. The magnets of each pair of primary magnets are spaced apart from each other by a gap. A dimension of the small, weak magnet extending along the direction of the Ampere force exerted on the coil unit is greater than a dimension of the small, weak magnet extending along a direction in which the small, weak magnet faces the two gaps. Apart from this difference, it is similar to Embodiment 1, including in terms of the structures of the primary magnetic pole units and the coil unit, as well as component arrangement.

### EMBODIMENT 4

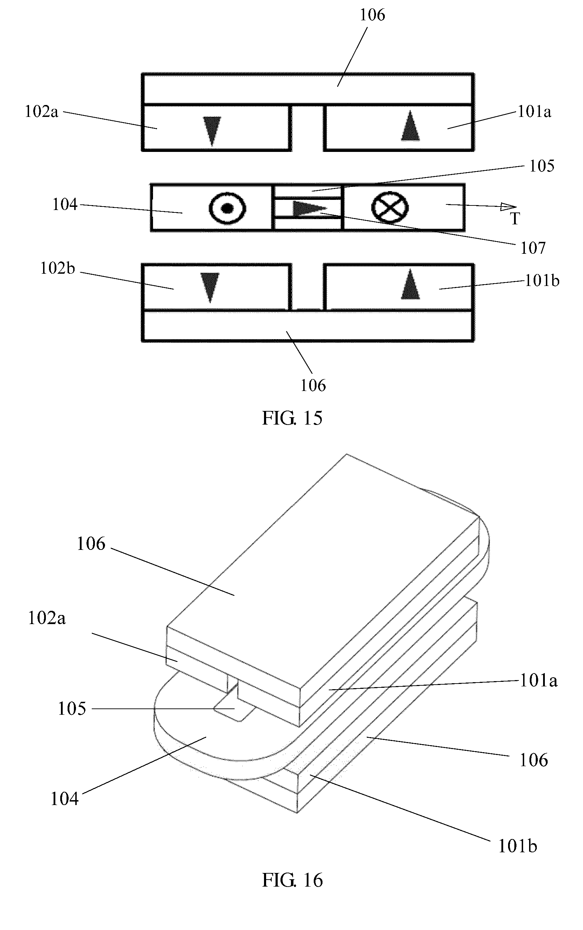

Referring to FIGs. 15 to 18, this Embodiment is similar to Embodiment 2 in view of the primary magnetic pole units and coil unit each in a vertical configuration, the coil unit having the same structure, the primary magnetic pole units each having a similar structure, and the same working mechanism. It differs from Embodiment 2 only in the absence of the magnets 103 from the primary magnetic pole units. Meanwhile, this Embodiment is also similar to Embodiment 3 and differs from Embodiment 3 only in the primary magnetic pole units and coil unit each in a horizontal configuration. As shown in FIGs. 16 to 18, apart from the aforementioned difference, this Embodiment is similar to Embodiment 3 in the rest portion of the flat voice coil motor.

The present invention provides an improved solution for the overheating issue of voice coil motors of a fine-motion vector motor responsible for outputting vertical forces. The fine-motion vector motor consists of six voice coil motors, including three for horizontal outputs and three for vertical outputs, and is designed to bear a load of 20 kilograms. After allocation of the load to the three voice coil motors for vertical outputs, each of these motors needs to output a force as great as 66 N in order to levitate the load even without acceleration. In this state, each motor will generate heat at 50 W (even more when required to accelerate the load), thus creating a great challenge to the water-cooling system.

Voice coil motors are single-phase short-stroke motors with only one degree of freedom. When outputting a vertical force (FIG 1), a rather portion of their power consumption is attributable to the load gravity, and the consumption will keep if there is no change in the load. In this case, when a flat voice coil motor with gravity compensation according to the present invention is used, a most part of the gravity will be cancelled out by the force provided by the magnets, and the motor will only need to cover the rest small part. In addition, only if an upward acceleration is required, then will be needed an increase in its working current. This improvement can lead to an approximately about 90% reduction in power consumption of the voice coil motors.

To sum up, according to the present invention, the coil unit is provided with a small, weak magnet disposed therein, which creates magnetic repulsion and attraction forces with the primary magnetic pole units, thereby always ensuring a vertically upward force on the coil unit to provide gravity compensation. In addition, this arrangement is achieved simply by replacing an internal portion of the coil unit with the small, weak magnet, which neither has influence on the Ampere force acting on the coil in the coil unit nor adversely leads to motor overheating caused by a structural addition. In this way, a flat voice coil motor with mover gravity compensation is entailed. In practical applications, the small, weak magnet itself is susceptible to damage, and the force needed to provide gravity compensation is relatively minor. So, in order to prevent the small, weak magnet from cracking, the small, weak magnet is desired to be miniaturized and embedded in the bobbin.

## Claims

1. A flat voice coil motor, comprising a coil unit and two primary magnetic pole units exerting an Ampere force on the coil unit, wherein the coil unit comprises a small, weak magnet, and the Ampere force exerted by the two primary magnetic pole units on the small, weak magnet is a vertically upward resultant force.

2. The flat voice coil motor according to claim 1, wherein each of the two primary magnetic pole units at least comprises a pair of primary magnets equidistant from the coil unit, the two primary magnetic pole units being symmetric with respect to the coil unit.

3. The flat voice coil motor according to claim 2, wherein in the two primary magnetic pole units, every two primary magnets that are symmetric to each other have a same magnetization direction, and wherein the pair of primary magnets in each of the two primary magnetic pole units have opposite magnetization directions.

4. The flat voice coil motor according to claim 3, wherein: the two primary magnetic pole units are disposed left and right to the coil unit to create a horizontal primary magnetic field; the coil unit comprises two energized conductor portions cutting the horizontal primary magnetic field; and the two energized conductor portions are arranged vertically with respect to each other.

5. The flat voice coil motor according to claim 4, wherein the two primary magnetic pole units exert a vertically upward Ampere force on the coil unit, and the small, weak magnet has a magnetization direction same as magnetization directions of two primary magnets that are disposed above the small, weak magnet in the two primary magnetic pole units.

6. The flat voice coil motor according to claim 5, wherein the two primary magnets that are disposed above the small, weak magnet exert a vertically upward resultant magnetic attraction force on the small, weak magnet, and two primary magnets that are disposed under the small, weak magnet exert a vertically upward resultant magnetic repulsion force on the small, weak magnet.

7. The flat voice coil motor according to claim 3, wherein: the two primary magnetic pole units are disposed above and under the coil unit to create a vertical primary magnetic field; the coil unit comprises two energized conductor portions cutting the vertical primary magnetic field; and the two energized conductor portions are arranged horizontally with respect to each other.

8. The flat voice coil motor according to claim 7, wherein the small, weak magnet has a magnetization direction same as a direction of the Ampere force exerted on the coil unit.

9. The flat voice coil motor according to claim 8, wherein: the two primary magnets that are disposed above the small, weak magnet in the two primary magnetic pole units exert a vertically upward resultant magnetic attraction force on the small, weak magnet, and the two primary magnets that are disposed under the small, weak magnet exert a vertically upward resultant magnetic repulsion force on the small, weak magnet.

10. The flat voice coil motor according to claim 1, further comprising spacer magnets and back irons, wherein: each of the spacer magnets is disposed between two primary magnets of a corresponding pair of primary magnets, and each of the spacer magnets together with the corresponding pair of primary magnets are fixed on a corresponding one of the back irons.

11. The flat voice coil motor according to claim 4, further comprising spacer magnets, wherein each of the spacer magnets is disposed between the two primary magnets of a corresponding pair of primary magnets, a left one of the spacer magnets having a magnetization direction opposite to a direction of the Ampere force exerted on the coil unit and a right one of the spacer magnets having a magnetization direction same as the direction of the Ampere force exerted on the coil unit.

12. The flat voice coil motor according to claim 7, further comprising spacer magnets, wherein each of the spacer magnets is disposed between the two primary magnets of a corresponding pair of primary magnets, a lower one of the spacer magnets having a magnetization direction same as a direction of the Ampere force exerted on the coil unit and an upper one of the spacer magnets having a magnetization direction opposite to the direction of the Ampere force exerted on the coil unit.

13. The flat voice coil motor according to claim 4 or 7, wherein the small, weak magnet has a dimension extending along a direction in which the small, weak magnet faces the energized conductor portions cutting the primary magnetic field that is greater than a dimension of the small, weak magnet extending along a direction in which the small, weak magnet faces the primary magnets.

14. The flat voice coil motor according to claim 1, wherein: the coil unit further comprises a bobbin and a coil wound on the bobbin; the small weak magnet is disposed in the bobbin.

15. The flat voice coil motor according to claim 14, further comprising back irons, wherein: each pair of primary magnets is fixed on a corresponding one of the back irons; the coil is wound on the bobbin around an axis that is parallel to the primary magnetic field created by the two primary magnetic pole units and perpendicular to the back irons.
